# EUROPEAN PATENT APPLICATION

(11) **EP 4 672 426 A1**
(43) Date of publication of application: **31.12.2025**
(21) Application number: 25178022.7
(22) Date of filing: 21.05.2025
(51) Int. Cl.: H01M 10/613, H01M 10/647, H01M 10/6554, H01M 10/6555, H01M 10/6557, H01M 10/6567, H01M 50/103, H01M 50/262, H01M 10/6556, H01M 50/209

(54) **LIQUID-COOLED PLATE, BATTERY MODULE AND BATTERY PACK**

(30) Priority: 25.06.2024 CN 202421469987 U; 26.09.2024 WO PCT/CN2024/121312
(71) Applicant: Eve Energy Co., Ltd., Huizhou, Guangdong 516006 (CN)
(72) Inventor: FAN, Xin, Huizhou, Guangdong, 516006 (CN); CHEN, Zhiwei, Huizhou, Guangdong, 516006 (CN)
(74) Representative: Berggren Oy

(57) **Abstract**

The present application provides a liquid-cooled plate, a battery module and a battery pack. A side of the first liquid-cooled plate body facing toward the second liquid-cooled plate body is provided with one or more recesses. The second liquid-cooled plate body includes a main body portion and one or more protruding portions. Each protruding portion is protruding from the main body portion. The one or more protruding portions are installed in the one or more recesses so that the first liquid-cooled plate body is installed to the second liquid-cooled plate body. The first liquid-cooled plate body and the second liquid-cooled plate body are positioned, and the installation of the first liquid-cooled plate body and the second liquid-cooled plate body is completed efficiently.

## Description

### TECHNICAL FIELD

The present disclosure relates to technical field of batteries, and more particularly, to a liquid-cooled plate, a battery module, and a battery pack.

### BACKGROUND

In the related art, a liquid-cooled plate of the battery can provide a more efficient heat dissipation performance, and the uniform control of the surface temperature of the battery can be realized through a circulating cooling system of the liquid-cooled plate. So, it can avoid the occurrence of local overheating or local overcooling, thereby improving the stability and the safety of the battery.

### SUMMARY

When the number of battery cells is increased, the number of liquid-cooled plates is correspondingly increased. So, the assembly process between the plurality of liquid-cooled plates is complicated, and the installation efficiency is lower.

The present application provides a liquid-cooled plate including a liquid-cooled bottom plate, in which the liquid-cooled bottom plate includes one or more first liquid-cooled plate bodies and one or more second liquid-cooled plate bodies disposed adjacently in a first direction;

a side of the first liquid-cooled plate body facing toward the second liquid-cooled plate body is provided with one or more recesses;

the second liquid-cooled plate body comprises a main body portion and one or more protruding portions, and each of the one or more protruding portions is protruded from a side of the main body portion facing toward the first liquid-cooled plate body;

the one or more protruding portions are mounted in the one or more recesses, such that the first liquid-cooled plate body is mounted to the second liquid-cooled plate body.

According to embodiments of the present application, it is provided a battery module. The battery module includes a battery cell module and a liquid-cooled plate, and the battery cell module is mounted on the liquid-cooled plate.

According to embodiments of the present application, it is provided a battery pack including a battery module, a housing and fasteners, in which the battery module, the housing and the fasteners are fixedly connected.

### BENEFICIAL EFFECT

According to the liquid-cooled plate provided in the present invention, at least one recess is provided on a side of the first liquid-cooled plate body facing the second liquid-cooled plate body, and the second liquid-cooled plate body includes a main body portion and at least one protruding portion. Each protruding portion is protruded from a side of the main body portion facing the first liquid-cooled plate body. The at least one protruding portion is mounted in the at least one recess, so that the first liquid-cooled plate body is mounted to the second liquid-cooled plate body. Since the protruding portions correspond to the recesses, the first liquid-cooled plate body and the second liquid-cooled plate body can be quickly positioned in comparison with an assembly manner in which the side edges are directly bonded in a conventional chassis splicing structure. The splicing of the first liquid-cooled plate body and the second liquid-cooled plate body can be realized by the cooperation of the protruding portions and the recesses, so that the cases such as installing shift, installing misalignment can be avoided, the installation of the first liquid-cooled plate body and the second liquid-cooled plate body can be efficiently completed, and the problem of lower installation efficiency of the liquid-cooled plate can be resolved.

The battery module provided in the present application adopts the liquid-cooled plate, so as to improve the installation efficiency of the battery module.

The battery pack provided in the present application is provided with the above-mentioned battery module to improve the production and processing efficiency of the battery pack.

### BRIEF DESCRIPTION OF THE DRAWINGS

FIG. 1 is a top view of a liquid-cooled bottom plate according to embodiments of the present application;
FIG. 2 is an exploded view of a liquid-cooled plate according to embodiments of the present application;
FIG. 3 is a top view of a first liquid-cooled plate body according to embodiments of the present application;
FIG. 4 is another exploded view of a liquid-cooled plate according to embodiments of the present application;
FIG. 5 is an exploded view of a battery module according to embodiments of the present application;
FIG. 6 is a top view of a battery module according to embodiments of the present application; and
FIG. 7 is a structural diagram of a battery module according to embodiments of the present application.

### Reference signs:

100, liquid-cooled plate; 1001, first fixing hole;
10, liquid cooled bottom plate; 101, recess; 1002, recess wall; 1003, recess opening; 1011, recess bottom wall; 1012, recess sidewall; 102, main body portion; 103, protruding portion; 1031, connecting wall; 1032, guiding wall;
11, first liquid-cooled plate body; 111, first body portion; 112, first projection; 1120, first projecting edge; 1121, first connecting wall; 1122, first guide wall; 113, first groove; 1130, first groove wall; 1131, first groove bottom wall; 1132, first groove sidewall; 1133, first groove opening; 12, second liquid-cooled plate body; 121, second body portion; 122, second projection; 1220, second projecting edge; 1221, second connecting wall; 1222, second guide wall; 123, second groove; 1230, second groove wall; 1231, second groove bottom wall; 1232, second groove sidewall; 1233, second groove opening;
20, liquid-cooled side plate; 21, third liquid-cooled plate body; 22, fourth liquid-cooled plate body;
200, battery module; 201, battery cell module; 202, first thermal conductive adhesive layer; 203, second thermal conductive adhesive layer; 204, first limiting glue strip; 205, second limiting glue strip; and 206, and buffer frame.

### DETAILED DESCRIPTION

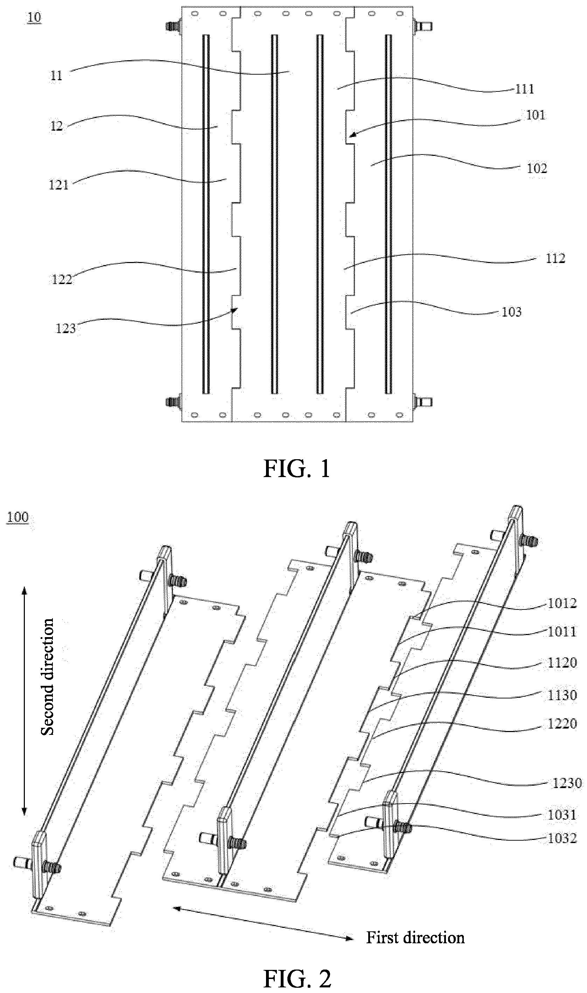

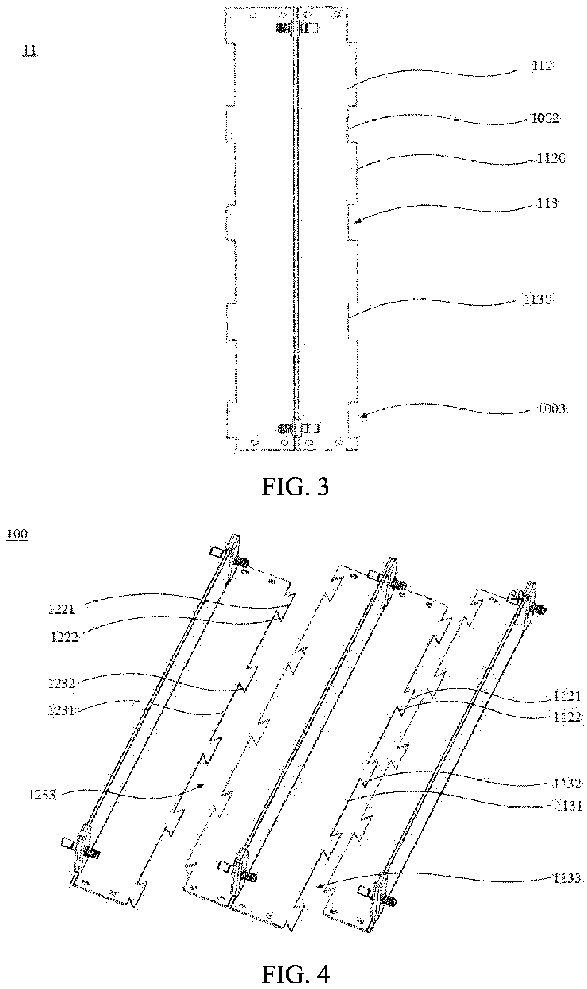

Referring to FIGS. 1-3, FIG. 1 is an a top view of a liquid-cooled bottom plate according to embodiments of the present application, FIG. 2 is exploded view of a liquid-cooled plate according to embodiments of the present application, and FIG. 3 is a top view of a first liquid-cooled plate body according to embodiments of the present application. The present application provides a liquid-cooled plate 100. At least one recess 101 is provided on a side of a first liquid-cooled plate body 11 facing toward a second liquid-cooled plate body 12. The second liquid-cooled plate body 12 includes a main body portion and at least one protruding portion 103. Each protruding portion 103 is provided on a side of the main body portion 102 facing the first liquid-cooled plate body 11. The protruding portions 103 are mounted in the recesses 101. So, the first liquid-cooled plate body 11 is mounted to the second liquid-cooled plate body 12.

Specifically, the liquid-cooled plate 100 includes a liquid-cooled bottom plate 10. The liquid-cooled bottom plate 10 includes a first liquid-cooled plate body 11 and a second liquid-cooled plate body 12 disposed adjacent to each other in a first direction. The first liquid-cooled plate body 11 includes a first body portion 111 and first projections 112. The first body portion 111 includes a first side edge facing the second liquid-cooled plate body 12. The first projections 112 are connected to the first side edge. The first groove 113 is formed the two adjacent first projections 112.

The second liquid-cooled plate body 12 includes a second body portion 121 and second projections 122. The second body portion includes a second side edge facing the first side edge. The second projections 122 are connected to the second side. The second groove 123 is formed the adjacent two second projections 122.

The first projection 112 is mounted within the second groove 123, and the second projection 122 is mounted within the first groove 113, so that the first liquid-cooled plate body 11 is mounted to the second liquid-cooled plate body 12.

It will be appreciated that the first projections 112 are correspondingly mounted to the second grooves 123, and the second projections 122 are correspondingly mounted to the first grooves 113, so that the first liquid-cooled plate body 11 and the second liquid-cooled plate body 12 can be quickly positioned. In this way, it may avoid the installing shift and the installing misalignment, and may efficiently complete the mounting of the first liquid-cooled plate body 11 and the second liquid-cooled plate body 12, thereby improving the overall assembly speed of the liquid-cooled plate 100. In addition, the present application is simple in structure and convenient to process, and the costs of mold opening and manufacturing can be further reduced.

In some embodiments, the liquid-cooled bottom plate 10 includes a plurality of first liquid-cooled plate bodies 11 and a plurality of second liquid-cooled plate bodies 12 arranged in sequence in the first direction. The first body portion 111 includes two first side edges. The first projections 112 are connected to the two first side edges. Each of the first side edges is arranged toward one second liquid-cooled plate body 12. For example, one second liquid-cooled plate body 12 is arranged on a left side of the first liquid-cooled plate body 11, and another second liquid-cooled plate body 12 is arranged on a right side of the first liquid-cooled plate body 11. The first projections 112 at the left side are mounted to the second grooves 123 of the second liquid-cooled plate body 12 at the left side. The first projections 112 at the right side are mounted on the second grooves 123 of the second liquid-cooled plate body 12 at the right side. The first liquid-cooled plate bodies 11 and the second liquid-cooled plate bodies 12 form a liquid-cooled surface. The present application does not limit the number of the first liquid-cooled plate bodies 11 and the second liquid-cooled plate bodies 12. The number of the first liquid-cooled plate bodies 11 and the second liquid-cooled plate bodies 12 can be increased based on the cases, so as to widen the overall length of the liquid-cooled plate 100.

In some embodiments, the first liquid-cooled plate body 11 includes a recess wall 1002 forming a recess 101. The protruding portion 103 includes a protruding edge facing towards the recess wall 1002. The protruding edge is adhered to the recess wall 1002 when the protruding portion 103 is mounted to the recess 101.

Specifically, the first liquid-cooled plate body 11 includes a first groove wall 1130 forming a first groove 113. The second projection 122 includes a second projecting edge 1220 facing the first groove wall 1130. The second projecting edge 1220 is adhered to the first groove wall 1130 when the second projection 122 is mounted to the first groove 113.

The second liquid-cooled plate body 12 includes a second groove wall 1230 forming a second groove 123. The first projection 112 includes a first projecting edge 1120 facing the second groove wall 1230. The first projecting edge 1120 is adhered to the second groove wall 1230 when the first projection 112 is mounted to the second groove 123.

It will be appreciated that since the protruding portions (or projections) and the recesses (or grooves) may fall off during the mounting process, the stability of the structure can be improved by adhesive bonding. The engagement of the recesses (or grooves) and the protruding portions (projections) increases the area of the contact surface between the plurality of liquid-cooled plates 100 as compared with the flat side edges, so that the adhesive strength can be improved by increasing the adhesive bonding area of the liquid-cooled plates 100.

Referring to FIG. 4, FIG. 4 is another exploded view of a liquid-cooled plate according to embodiments of the present application. The first liquid-cooled plate body 11 includes a recess bottom wall 1011 and two recess sidewalls 1012 forming the recess 101. Two ends of the recess bottom wall 1011 are each connected to one recess sidewall 1012. Ends of the two recess sidewalls 1012 which are away from the recess bottom wall 1011 are spaced apart from each other, so as to form a recess opening 1003. The protruding portion 103 includes a connecting wall 1031 facing the recess bottom wall 1011. A width of the connecting wall 1031 is larger than a width of the recess opening 1003.

Specifically, in some embodiments, the first liquid-cooled plate body 11 includes a first groove bottom wall 1131 and two first groove sidewalls 1132 forming the first groove 113. The second projection 122 includes a second connecting wall 1221 facing the first groove bottom wall 1131. Ends of two first groove sidewalls 1132 that are away from the first groove bottom wall 1131 are spaced apart from each other, so as to form a first groove opening 1133. A width of the second connecting wall 1221 is larger than a width of the first groove opening 1133.

The second liquid-cooled plate body 12 includes a second groove bottom wall 1231 and two second groove sidewalls 1232 forming a second groove 123. The first projection 112 includes a first connecting wall 1121 facing the second groove bottom wall 1231. Ends of two second groove sidewalls 1232 which are away from the second groove bottom wall 1231 are spaced apart from each other, so as to form a second groove opening 1233. A width of the first connecting wall 1121 is larger than a width of the second groove opening 1233.

Specifically, when the second projection 122 is snapped into the first groove 113, the second connecting wall 1221 is tightly attached to the first groove bottom wall 1131. In a case where the width of the second connecting wall 1221 is larger than the width of the first groove opening 1133, due to being limited by a size of the first groove opening 1133, the second projection 122 does not slide out of the first groove opening 1133 in the first direction, that is, a laying direction of the liquid-cooled bottom plate 10. So, the stability of the mounting is improved. Similarly, after the first projection 112 is snapped into the second groove 123, the first connecting wall 1121 is tightly attached to the second groove bottom wall 1231. Since the width of the first connecting wall 1121 is larger than the width of the second groove opening 1233, the first projection 112 does not slide out of the second groove opening 1233 in the first direction.

It will be appreciated that when the width of the first connecting wall 1121 is larger than the width of the second groove opening 1233, and the width of the first connecting wall 1121 is larger than the width of the second groove opening 1233, since the projections do not easily slide out of the corresponding grooves, the first liquid-cooled plate body 11 and the second liquid-cooled plate body 12 can be connected by adhesive or not.

In some embodiments, the protruding portion 103 further includes two guiding walls 1032. Two ends of the connecting wall 1031 are each connected to one guiding wall 1032. The guiding wall 1032 is obliquely disposed from the main body portion 102 in a direction away from the main body portion 102 and away from the other guiding wall 1032.

In some embodiments, the first projection 112 includes two first guide walls 1122. The two first guide walls 1122 are respectively connected to two ends of the first connecting wall 1121. The first guide wall 1122 is obliquely disposed from the first body portion 111 in a direction away from the first body portion 111 and away from the other first guide wall 1122. The first projection 112 is integrally formed into a trapezoidal structure. When the first projection 112 is snapped into the second groove 123, the trapezoidal shape with a narrow front end and a wide rear end can prevent the first projection 112 from falling off.

In some embodiments, the second projection 122 includes two second guide walls 1222. The two second guide walls 1222 are respectively connected to two ends of the second connecting wall 1221. The second guide walls 1222 are provided obliquely in a direction away from the second body portion 121 and away from the other second guide wall 1222. The second projection 122 is of a trapezoidal structure. Similarly, when the second projection 122 is snapped into the first groove 113, the trapezoidal shape with a narrow front end and a wide rear end can prevent the second projection 122 from falling off.

It should be noted that in the first liquid-cooled plate body 11, since the first groove 113 is formed between the every two adjacent first projections 112, when the second projections 122 are mounted to the first grooves 113, the second guide walls 1222 are tightly attached to the first groove sidewalls 1132, which may be considered that the second guide walls 1222 are tightly attached to the first guide walls 1122. Similarly, in the second liquid-cooled plate body 12, since the second groove 123 is formed between the every two adjacent second projections 122, when the first protrusions 112 are mounted to the second grooves 123, the first guide walls 1122 are tightly attached to the second groove sidewalls 1232, which may be considered that the first guide walls 1122 are tightly attached to the second guide walls 1222.

In some embodiments, the first liquid-cooled plate body 11 is provided with a plurality of recesses 101 arranged along a length direction of the first liquid-cooled plate body 11. The second liquid-cooled plate body 12 is provided with a plurality of protruding portions 103. The protruding portions 103 are arranged along a length direction of the second liquid-cooled plate body 12.

It will be appreciated that cell units of the battery cell module 201 are arranged along the length directions of both the first liquid-cooled plate body 11 and the second liquid-cooled plate body 12. The plurality of recesses 101 are arranged along the length direction of the first liquid-cooled plate body 11. The projections are arranged along the length direction of the second liquid-cooled plate body 12. So, a longer side edge can be quickly installed, thereby increasing assembly efficiency.

In some embodiments, the liquid-cooled plate 100 further includes a liquid-cooled side plate 20. The liquid-cooled side plate 20 includes a third liquid-cooled plate body 21 and a fourth liquid-cooled plate body 22 disposed adjacent to each other. The third liquid-cooled plate body 21 is connected to the first liquid-cooled plate body 11 in a second direction. The fourth liquid-cooled plate body 22 is connected to the second liquid-cooled plate body 12 in the second direction. The second direction is perpendicular to the liquid-cooled bottom plate 10. The third liquid-cooled plate body 21 and the fourth liquid-cooled plate body 22 can increase the side liquid-cooling effect on a bottom liquid-cooling basis.

In some embodiments, the liquid-cooled plate 100 further includes a fifth liquid-cooled plate body disposed on a side of the second liquid-cooled plate body 12 facing away from the first liquid-cooled plate body 11.

In some examples, a side of the second liquid-cooled plate body 12 which faces toward the fifth liquid-cooled plate body is provided with recesses 101. A side of the fifth liquid-cooled plate body which faces toward the second liquid-cooled plate body 12 is provided with protruding portions 103. The protruding portions 103 are mounted in the recesses 101 so that the second liquid-cooled plate body 12 is mounted to the fifth liquid-cooled plate body.

In some examples, a side of the second liquid-cooled plate body 12 facing toward the fifth liquid-cooled plate body is provided with protruding portions 103. A side of the fifth liquid-cooled plate body facing toward the second liquid-cooled plate body 12 is provided with recesses 101. The protruding portions 103 are mounted in the recesses 101 so that the second liquid-cooled plate body 12 is mounted to the fifth liquid-cooled plate body.

It will be appreciated that when the side, which faces toward the second liquid-cooled plate body 12, of each of the first liquid-cooled plate body 11 and the fifth liquid-cooled plate body is provided with recesses 101, the fifth liquid-cooled plate body may be another first liquid-cooled plate body 11 adjacent to the second liquid-cooled plate body 12.

In some embodiments, the liquid-cooled bottom plate 10 includes first liquid-cooled plate bodies 11 and second liquid-cooled plate bodies 12 connected in sequence in the first direction. When the sum of the first liquid-cooled plate bodies 11 and the second liquid-cooled plate bodies 12 is even number, a head end of the liquid-cooled bottom plate 10 is the first liquid-cooled plate body 11, and a tip end of the liquid-cooled bottom plate 10 is the second liquid-cooled plate body 12. The third liquid-cooled plate body 21 is vertically connected to the first liquid-cooled plate body 11 at the head end, and connected to a side of the first liquid-cooled plate body 11 remote from the second liquid-cooled plate body 12. The fourth liquid-cooled plate body 22 is vertically connected to the second liquid-cooled plate body 12 at the tip end, and connected to a side of the second liquid-cooled plate body 12 remote from the first liquid-cooled plate body 11. The first liquid-cooled plate bodies 11 or the second liquid-cooled plate bodies 12 are arranged between the head end and the tip end of the liquid-cooled plate 100. In this case, the third liquid-cooled plate bodies 21 are each vertically connected to a middle portion of a respective first liquid-cooled plate body 11 between the liquid-cooled plate body at the head end and the liquid-cooled plate body at the tip end; or the fourth liquid-cooled plate bodies 22 are each vertically connected to a middle portion of a respective second liquid-cooled plate body 12 between the liquid-cooled plate body at the head end and the liquid-cooled plate body at the tip end.

In some embodiments, the liquid-cooled bottom plate 10 includes first liquid-cooled plate bodies 11 and second liquid-cooled plate bodies 12 connected in sequence in the first direction. When the sum of the first liquid-cooled plate bodies 11 and the second liquid-cooled plate bodies 12 is odd number, a head end and a tip end of the liquid-cooled bottom plate 10 are the first liquid-cooled plate bodies 11. The third liquid-cooled plate bodies 21 are vertically connected to the first liquid-cooled plate body 11 at the head end and the first liquid-cooled plate body 11 at the tip end, and are each connected to a side of a respective first liquid-cooled plate body 11 remote from the second liquid-cooled plate body 12. The first liquid-cooled plate bodies 11 or the second liquid-cooled plate bodies 12 are provided between the head end and the tip end of the liquid-cooled plate 100. In this case, the third liquid-cooled plate bodies 21 are each vertically connected to the middle portion of a respective first liquid-cooled plate body 11 between the liquid-cooled plate body at the head end and the liquid-cooled plate body at the tip end; or the fourth liquid-cooled plate body 22 are each vertically connected to the middle portion of a respective second liquid-cooled plate body 12 between the liquid-cooled plate body at the head end and the liquid-cooled plate body at the tip end.

In some embodiments, the third liquid-cooled plate body 21 and the first liquid-cooled plate body 11 are integrally molded, and the fourth liquid-cooled plate body 22 and the second liquid-cooled plate body 12 are integrally molded. It will be appreciated that the integrally molded structure can improve processing efficiency while increasing structural stability.

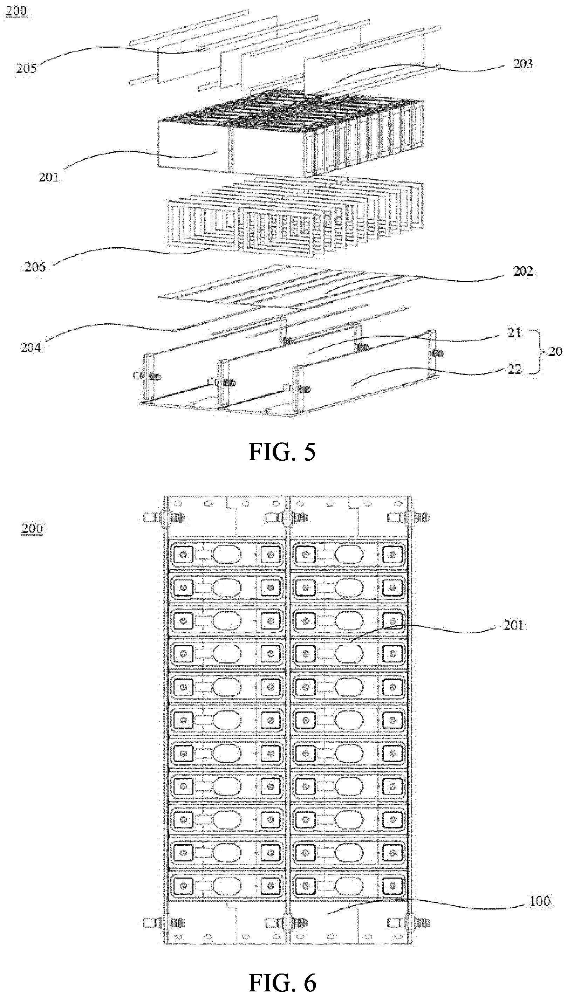

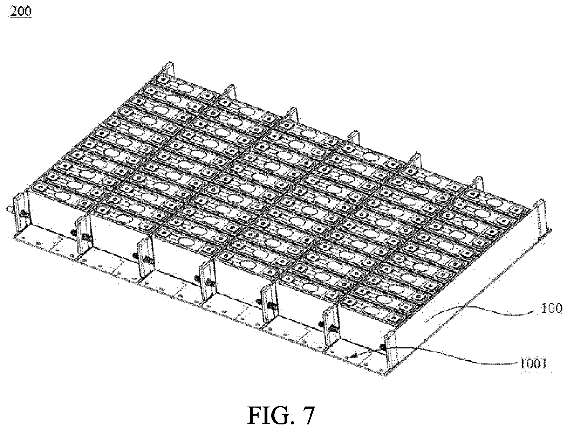

Referring to FIGS. 5-7, FIG. 5 is an exploded view of a battery module according to embodiments of the present application, FIG. 6 is a top view of a battery module according to embodiments of the present application, and FIG. 7 is a structural view of a battery module according to embodiments of the present application.

The present application further provides a battery module 200 including a battery cell module 201 and a liquid-cooled plate 100. The battery cell module 201 is mounted to the liquid-cooled plate 100.

Specifically, the battery cell module 201 includes a plurality of battery cell arrays. Each battery cell array includes a plurality of cell units in series. A buffer frame 206 is provided between two adjacent cell units to prevent the cell units from impacting. The third liquid-cooled plate body 21 and the fourth liquid-cooled plate body 22 disposed adjacent to each other form a spacing portion. Each spacing portion is provided with a battery cell array. That is, a side surface, which has a larger area, of the battery cell array faces towards the third liquid-cooled plate body 21 or the fourth liquid-cooled plate body 22. It is understood that the number of the third liquid-cooled plate bodies 21 and the fourth liquid-cooled plate bodies 22 can be increased as the length of the liquid-cooled bottom plate 10 is extended, while more battery cell arrays can be provided.

In some embodiments, the battery module 200 includes a first thermal conductive adhesive layer 202 and a second thermal conductive adhesive layer 203. The first thermal conductive adhesive layer 202 is adhesively disposed between the battery cell module 201 and the liquid-cooled bottom plate 10 of the liquid-cooled plate 100. That is, the first thermal conductive adhesive layer 202 is adhesively disposed between the battery cell module 201 and the first liquid-cooled plate body 11, and the first thermal conductive adhesive layer 202 is adhesively disposed between the battery cell module 201 and the second liquid-cooled plate body 12.

The second thermal conductive adhesive layer 203 is adhesively disposed between the battery cell module 201 and the liquid-cooled side plate 20 of the liquid-cooled plate 100. That is, the second thermal conductive adhesive layer 203 is adhesively disposed between the battery cell module 201 and the third liquid-cooled plate body 21, and the second thermal conductive adhesive layer 203 is adhesively disposed between the battery cell module 201 and the fourth liquid-cooled plate body 22.

It will be appreciated that since the battery module 200 generates a certain amount of heat during operation, if the battery module 200 is failure to effectively dissipate heat, the performance and the life of the battery may be affected. The thermal conductive adhesive layer can fill the internal space of the battery and conduct the heat generated by the battery to the external environment, thereby reducing the temperature of the battery and improving the working efficiency and safety thereof.

In some embodiments, the battery module 200 includes a plurality of first limiting glue strips 204 and a plurality of second limiting glue strips 205. The first limiting glue strips 204 are disposed in a first direction between the battery module 201 and the liquid-cooled bottom plate 10 of the liquid-cooled plate 100. The first thermal conductive adhesive layer 202 is disposed between two adjacent first limiting glue strips 204. That is, the first limiting glue strip 204 is adhesively disposed between the battery cell module 201 and the first liquid-cooled plate body 11, and the first limiting glue strip 204 is adhesively disposed between the battery cell module 201 and the second liquid-cooled plate body 12.

The second limiting glue strip 205 is adhesively disposed between the battery cell module 201 and the liquid-cooled side plate 20 of the liquid-cooled plate 100 at intervals in the second direction. The second thermal conductive adhesive layer 203 is disposed between two adjacent second limiting glue strips 205. That is, the second limiting glue strip 205 is disposed between the battery cell module 201 and the third liquid-cooled plate body 21, and the second limiting glue strip 205 is disposed between the battery cell module 201 and the fourth liquid-cooled plate body 22.

Specifically, a plurality of first limiting glue strips 204 are arranged at intervals in parallel. The first thermal conductive adhesive layer 202 is coated between two adjacent first limiting glue strips 204. A plurality of second limiting glue strips 205 are arranged at intervals in parallel. A second thermal conductive adhesive layer 203 is coated between two adjacent second limiting glue strips 205. The present application does not limit the number of the first limiting glue strips 204 and the second limiting glue strips 205, which may be two, three, four, or the like. The thickness of the limiting glue strip may be set based on the preset coating thickness of the thermal conductive adhesive layer. After attaching and mounting the limiting glue strips, the limiting glue strips and the thermal conductive adhesive layers can be adhered to the battery cell module 201, and the space between adjacent limiting glue strips can divide the coating range of the thermal conductive adhesive layer. The uniform distribution of the thermal conductive adhesive layer during pressing is achieved by providing limiting glue strips, so that the battery cell module 201 can be pressed to a fixed distance during the battery cell module 201 is pressed together with the liquid-cooled plate 100. So, the contact portion between the liquid-cooled plate 100 and the battery cell module 201 is prevented from being uneven.

In some embodiments, the third liquid-cooled plate body 21 and the fourth liquid-cooled plate body 22 are disposed on two sides of a column of cell units after the thermal conductive adhesive layers and the limiting glue strips are adhered. Then, the battery cell module 201 and the liquid-cooled plate 100 are pressed together by a pressing tool, so that each column of battery cell arrays is fixed between the third liquid-cooled plate body 21 and the fourth liquid-cooled plate body 22. Then, a busbar is welded at a top portion of the battery cell module 201, and a plurality of cell units are further connected through the busbar. Finally, the plurality of cell units after being connected are conveyed to a heating standing station for heating, so that the thermal conductive adhesive layers are completely solidified, so as to enable the battery module 200 reach a predetermined connection strength.

The present application also provides a battery pack (not shown in the drawings) including a liquid-cooled plate 100 and a housing. Two sides of the liquid-cooled plate 100 are provided with first fixing holes 1001. The first fixing holes 1001 may be evenly spaced in the first liquid-cooled plate body 11 and the second liquid-cooled plate body 12. The housing is provided with second fixing holes. The battery module 200 further includes multiple fasteners each of which is provided in a corresponding first fixing hole and a respective second fixing hole, so as to fasten the liquid-cooled plate 100 to the housing. The fasteners may be screws, nuts, bolts, etc. Since the third liquid-cooled plate body 21 and the fourth liquid-cooled plate body 22 limit the movement of the liquid-cooled bottom plate in the extending direction of the liquid-cooled bottom plate 10, and the fixing holes restrict the movement of the liquid-cooled plate 100 from two sides of the liquid-cooled bottom plate 10, the position of the battery cell module 201 in the battery pack is relatively constant.

## Claims

1. A liquid-cooled plate (100) comprising a liquid-cooled bottom plate (10), wherein the liquid-cooled bottom plate comprises one or more first liquid-cooled plate bodies (11) and one or more second liquid-cooled plate bodies (12) disposed adjacently in a first direction;
a side of the first liquid-cooled plate body (11) facing toward the second liquid-cooled plate body (12) is provided with one or more recesses (101);
the second liquid-cooled plate body (12) comprises a main body portion (102) and one or more protruding portions (103), and each of the one or more protruding portions (103) is protruded from a side of the main body portion (102) facing toward the first liquid-cooled plate body (11);
wherein the one or more protruding portions (103) are mounted in the one or more recesses (101), such that the first liquid-cooled plate body (11) is mounted to the second liquid-cooled plate body (12).

2. The liquid-cooled plate (100) according to claim 1, wherein the first liquid-cooled plate body (12) comprises a recess wall (1002) forming the recess (101), the one or more protruding portions (103) each comprises a protruding edge facing toward the recess wall (1002), and the protruding edge is adhered to the recess wall (1002) when the protruding portion (103) is mounted to the recess (101).

3. The liquid-cooled plate (100) according to claim 1, wherein
the first liquid-cooled plate body (11) comprises a recess bottom wall (1011) and two recess sidewalls (1012) forming the recess (101), two ends of the recess bottom wall (1011) are each connected to a respective one of the two groove sidewalls (1012), and ends of the two recess sidewalls (1012) which are away from the recess bottom wall (1011) are spaced apart and forms a recess opening (1003);
the protruding portion (103) comprises a connecting wall (1031) facing the recess bottom wall (1011), and a width of the connecting wall (1031) is greater than a width of the recess opening (1003).

4. The liquid-cooled plate (100) according to claim 3, wherein the protruding portion (103) further comprises two guiding walls (1032), two ends of the connecting wall (1031) are each connected to a respective one of the two guiding walls (1032), each of the two guiding walls (1032) is obliquely arranged from the main body portion (102) in a direction away from the main body portion (102) and away from an other of the two guiding walls (1032).

5. The liquid-cooled plate (100) according to any one of claims 1 to 4, wherein
the first liquid-cooled plate body (11) is provided with the recesses (101) arranged along a length direction of the first liquid-cooled plate body (11);
the second liquid-cooled plate body (12) is provided with the protruding portions (103) arranged along a length direction of the second liquid-cooled plate body (12).

6. The liquid-cooled plate (100) according to claim 5, wherein the first liquid-cooled plate body comprises a first body portion (111) and a plurality of first projections (112), the first body portion (111) comprises two side edges extending along the length direction of the first liquid-cooled plate body, each of ones of the plurality of first projections arranged at one of the two side edges is opposite to a corresponding one of ones of the recesses (101) arranged at another one of the two side edges.

7. The liquid-cooled plate (100) according to claim 6, wherein each of the plurality of first projections (112) comprises two guide walls (1122) opposite to each other in the length direction of the first liquid-cooled plate body, and each of the two guide walls is obliquely arranged from the first body portion in a direction away from the first body portion and away from another one of the two guide walls.

8. The liquid-cooled plate (100) according to any one of claims 1 to 7, further comprising a liquid-cooled side plate (20) comprising a third liquid-cooled plate body (21) and a fourth liquid-cooled plate body (22) disposed adjacently, the third liquid-cooled plate body (21) is connected to the first liquid-cooled plate body (11) in a second direction, the fourth liquid-cooled plate body (22) is connected to the second liquid-cooled plate body (12) in the second direction, and the second direction is perpendicular to the first direction.

9. The liquid-cooled plate (100) according to claim 8, wherein the third liquid-cooled plate body (21) is connected to a middle portion of the first liquid-cooled plate body, and the fourth liquid-cooled plate body (22) is connected to a side edge of the second liquid-cooled plate body that is extended in a length direction of the second liquid-cooled plate body and away from the first liquid-cooled plate body.

10. The liquid-cooled plate (100) according to claim 8, wherein the third liquid-cooled plate body (21) and the first liquid-cooled plate body (11) are integrally formed, and the fourth liquid-cooled plate body (22) and the second liquid-cooled plate body (12) are integrally formed.

11. The liquid-cooled plate (100) according to any one of claims 1 to 10, wherein the liquid-cooled plate (100) further comprises a fifth liquid-cooled plate body disposed on a side of the second liquid-cooled plate body (12) away from the first liquid-cooled plate body (11);
a side of the second liquid-cooled plate body (12) facing the fifth liquid-cooled plate body is provided with the one or more recesses (101), a side of the fifth liquid-cooled plate body facing the second liquid-cooled plate body (12) is provided with the one or more protruding portions (103), and the one or more protruding portions (103) are installed in the one or more recesses (101), such that the second liquid-cooled plate body (12) is installed in the fifth liquid-cooled plate body; or
the side of the second liquid-cooled plate body (12) facing the fifth liquid-cooled plate body is provided with the one or more protruding portions (103), the side of the fifth liquid-cooled plate body facing the second liquid-cooled plate body (12) is provided with the one or more recesses (101), and the one or more protruding portions (103) are installed in the one or more recesses (101), such that the second liquid-cooled plate body (12) is installed in the fifth liquid-cooled plate body.

12. A battery module (200) comprising:
a cell module (201);
the liquid-cooled plate (100) according to any one of claims 1 to 11, wherein the cell module (201) is mounted to the liquid-cooled plate (100).

13. The battery module (200) according to claim 12, comprising:
first thermal conductive adhesive layers (202) adhered between the battery cell module (201) and the liquid-cooled bottom plate (10) of the liquid-cooled plate (100); and
second thermal conductive adhesive layers (203) adhered between the battery cell module (201) and the liquid-cooled side plate (20) of the liquid-cooled plate (100).

14. The battery module (200) according to claim 13, wherein the battery module (200) comprises:
a plurality of first limiting glue strips (204) adhesively arranged between the battery cell module (201) and the liquid-cooled bottom plate (10) of the liquid-cooled plate (100) at intervals in the first direction, and each of the first thermal conductive adhesive layers (202) is arranged between two adjacent of the plurality of first limiting glue strips (204);
a plurality of second limiting glue strips (205) adhesively arranged between the cell module (201) and the liquid-cooled side plate (20) of the liquid-cooled plate (100) at intervals in a second direction, and each of the second thermal conductive adhesive layers (203) is arranged between two adjacent of the plurality of second limiting glue strips (205).

15. A battery pack comprising:
the battery module (200) according to any one of claims 12 to 14, wherein the liquid-cooled plate (100) is provided with first fixing holes (1001);
a housing provided with second fixing holes; and
fasteners disposed in the first fixing holes (1001) and the second fixing holes (1001) to fasten the liquid-cooled plate (100) and the housing.
